# EUROPEAN PATENT APPLICATION

(11) **EP 4 284 018 A1**
(43) Date of publication of application: **29.11.2023**
(21) Application number: 21921152.1
(22) Date of filing: 28.09.2021
(51) Int. Cl.: H04R 3/00, H04R 3/12

(54) **WIRELESS SPEAKER, WIRELESS AUDIO SYSTEM, PROGRAM, AND METHOD OF STATE CONTROL FOR WIRELESS SPEAKER**

(30) Priority: 19.01.2021 JP 2021006683
(71) Applicant: D&M Holdings Inc., Kawasaki-shi Kanagawa 210-8569 (JP)
(72) Inventor: ISHIDA Yasuchika, Kawasaki-shi, Kanagawa 210-8569 (JP)
(74) Representative: Mewburn Ellis LLP
(86) International application number: PCT/JP2021/035482
(87) International publication number: WO 2022/158048

(57) **Abstract**

[Problem] To improve operator convenience in controlling the ON/OFF states of a plurality of wireless speakers. [Solution] A wireless speaker 1, when instructed through a power button or by a controller 2 to transition to an ON state, causes said wireless speaker 1 itself to transition to an ON state and also transmits a command for ON state transition to each of other wireless speakers 1 belonging to the same group as said wireless speaker 1. When instructed to transition to an OFF state, said wireless speaker 1 transmits a command for OFF state transition to each of the other wireless speakers 1 belonging to the same group as said wireless speaker 1, and also transitions to the OFF state. If an ON state transition command has been received from another wireless speaker 1, then the wireless speaker 1 transitions to the ON state, and if an OFF state transition command has been received, then the wireless speaker 1 transitions to the OFF state

## Description

### Technical Field

The present invention relates to a wireless speaker, and more particularly, to a technology for state control for two or more wireless speakers that form a group and are capable of synchronous reproduction (group reproduction) of the same audio data within the group.

### Background Art

In Patent Literature 1, there is disclosed a wireless audio system capable of group reproduction of audio data using two or more wireless speakers.

In the above-mentioned wireless audio system, one of a plurality of wireless speakers belonging to the same group serves as a master (group leader) to download audio data from a media server or the like and reproduce and output the audio data and to transmit the reproduced data to each of the other wireless speakers (slaves) belonging to the same group and cause those speakers to output the reproduced data as well. This enables the group reproduction of audio data using a plurality of wireless speakers belonging to the same group.

### Citation List

### Patent Literature

[PTL 1] US 7987294 B2

### Summary of Invention

### Technical Problem

According to the wireless audio system as described in Patent Literature 1, a plurality of wireless speakers are arranged and grouped in each room, to thereby be able to achieve group reproduction of audio data in each room.

Incidentally, when a user moves from a room A in which group reproduction is being performed to another room B, it is preferred from the viewpoint of power saving not only to end the group reproduction in the room A but also to set all wireless speakers installed in the room A to an off (standby) state. However, it is troublesome to set off all the wireless speakers installed in the room A to the off state by operating power buttons of the wireless speakers or a controller therefor.

Meanwhile, when group reproduction is performed in the room B being a moving destination, in order to achieve a more satisfactory audio environment, it is preferred to set all wireless speakers installed in the room B to an on (active) state. However, it is troublesome to set all the wireless speakers installed in the room B to the on state by operating power buttons of the wireless speakers or a controller therefor. In addition, when a wireless speaker hidden by a foliage plant or the like is overlooked, group reproduction using all the wireless speakers present in the room B cannot be performed, thereby failing to achieve a satisfactory audio environment.

The present invention has been made in view of the above-mentioned circumstances, and has an object to increase convenience of an operator in controlling an on or off state of a plurality of wireless speakers.

### Solution to Problem

In order to solve the above-mentioned problems, a wireless speaker according to one embodiment of the present invention: stores member information on a group to which an own wireless speaker belongs; when the own wireless speaker is instructed to shift to an on state by a power button provided to the own wireless speaker or by a controller for remotely operating the own wireless speaker, shifts the own wireless speaker to the on state and transmits a command to shift to the on state to each of the other wireless speakers belonging to the same group as a group of the own wireless speaker, which are identified by the member information; and when the own wireless speaker is instructed to shift to an off state, transmits a command to shift to the off state to each of the other wireless speakers belonging to the same group as the group of the own wireless speaker, which are identified by the member information, and shifts the own wireless speaker to the off state. The wireless speaker according to the one embodiment of the present invention further shifts the own wireless speaker to the on state when the command to shift to the on state is received from another wireless speaker, and shifts the own wireless speaker to the off state when the command to shift to the off state is received.

For example, according to one embodiment of the present invention, there is provided a wireless speaker having a group reproduction function for synchronously reproducing the same audio data by a plurality of wireless speakers, the wireless speaker including: affiliated group information storage means for storing member information on a group to which an own wireless speaker currently belongs; shift-to-on-state control means for shifting the own wireless speaker to an on state when the own wireless speaker is instructed to shift to the on state by a power button provided to the own wireless speaker or by a controller for remotely operating the own wireless speaker or when a command to shift to the on state is received from another one of the plurality of wireless speakers; shift-to-off-state control means for shifting the own wireless speaker to an off state when the own wireless speaker is instructed to shift to the off state by the power button or by the controller or when a command to shift to the off state is received from another one of the plurality of wireless speakers; shift-to-on-state command transmission means for transmitting, when the own wireless speaker is instructed to shift to the on state by the power button or by the controller, the command to shift to the on state to each of the other ones of the plurality of wireless speakers being members of the group to which the own wireless speaker currently belongs, which are identified by the member information stored in the affiliated group information storage means; and shift-to-off-state command transmission means for transmitting, when the own wireless speaker is instructed to shift to the off state by the power button or by the controller, the command to shift to the off state to each of the other ones of the plurality of wireless speakers being the members of the group to which the own wireless speaker currently belongs, which are identified by the member information stored in the affiliated group information storage means.

### Advantageous Effects of Invention

With the present invention, it is possible to shift all the wireless speakers belonging to the same group to the on state by operating the power button of any one wireless speaker of the wireless speakers belonging to the group to instruct the shift to the on state or by operating the controller to select any one wireless speaker and instruct the shift to the on state. Further, it is possible to shift all the wireless speakers belonging to the same group to the off state by operating the power button of any one wireless speaker of the wireless speakers belonging to the group to instruct the shift to the off state or by operating the controller to select any one wireless speaker and instruct the shift to the off state. Therefore, according to the present invention, it is possible to increase the convenience of an operator in controlling the on or off state of the plurality of wireless speakers.

### Brief Description of Drawings

FIG. 1 is a schematic configuration diagram of a wireless audio system according to one embodiment of the present invention.
FIG. 2 is a sequence diagram for illustrating an operation example of the wireless audio system according to the one embodiment of the present invention.
FIG. 3 is a sequence diagram for illustrating the operation example of the wireless audio system according to the one embodiment of the present invention, and is a continuation of FIG. 2.
FIG. 4 is a sequence diagram for illustrating the operation example of the wireless audio system according to the one embodiment of the present invention, and is a continuation of FIG. 3.
FIG. 5 is a sequence diagram for illustrating the operation example of the wireless audio system according to the one embodiment of the present invention, and is a continuation of FIG. 4.
FIG. 6 is a schematic functional configuration diagram of a wireless speaker (1).
FIG. 7 is a flow chart for illustrating a grouping and ungrouping operation of the wireless speaker (1).
FIG. 8 is a flow chart for illustrating an operation for shifting the wireless speaker (1) to an on state.
FIG. 9 is a flow chart for illustrating an operation for shifting the wireless speaker (1) to an off state.
FIG. 10 is a schematic functional configuration diagram of a controller (2).
FIG. 11 is a flow chart for illustrating a shift-to-on-state command automatic transmission operation of the controller (2) .
FIG. 12 is a flow chart for illustrating a grouping and ungrouping command transmission operation of the controller (2).

### Description of Embodiments

Now, one embodiment of the present invention is described with reference to the accompanying drawings.

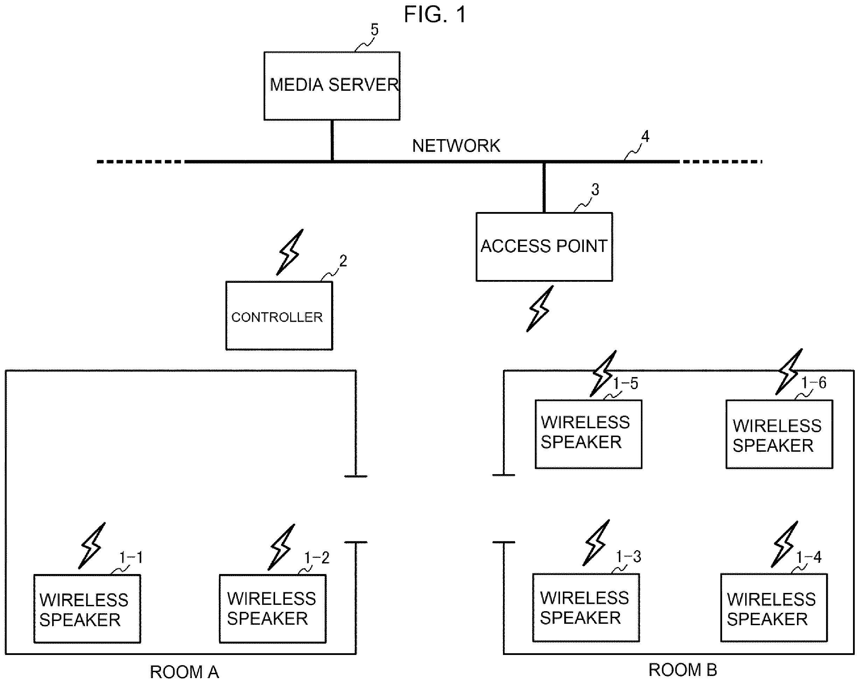

FIG. 1 is a schematic configuration diagram of a wireless audio system according to this embodiment. Here, a case in which the wireless audio system according to this embodiment is introduced into a house including two rooms A and B is described as an example.

As illustrated in the figure, the wireless audio system according to this embodiment includes a plurality of wireless speakers 1-1 to 1-6 (hereinafter also referred to simply as "wireless speakers 1") arranged in the rooms A and B and a controller 2.

The wireless speaker 1 has a group reproduction function for reproducing the same audio data in synchronization with the other wireless speakers 1 belonging to the same group. Specifically, any one wireless speaker 1 of the wireless speakers 1 belonging to the same group serves as a master to operate in a master mode, and the remaining wireless speakers 1 each serve as a slave to operate in a slave mode. In the master mode, the wireless speaker 1 downloads audio data from a media server 5 through an access point 3 and a network 4 such as wide area network (WAN) or a local area network (LAN) and reproduces and outputs the audio data. At the same time, the wireless speaker 1 transmits the reproduced data to each of the slave wireless speakers 1 belonging to the same group as that of the own wireless speaker 1. In the slave mode, the wireless speaker 1 receives the reproduced data from the master wireless speaker 1 belonging to the same group as that of the own wireless speaker 1 and outputs the reproduced data in synchronization with the master.

The controller 2 is formed of a wireless terminal such as a smartphone or a tablet personal computer (PC), and is wirelessly connected to the access point 3, to thereby remotely perform various operations on the wireless speaker 1, the operations including control of an on or off state, grouping, setting of the master and slaves, and reproduction control.

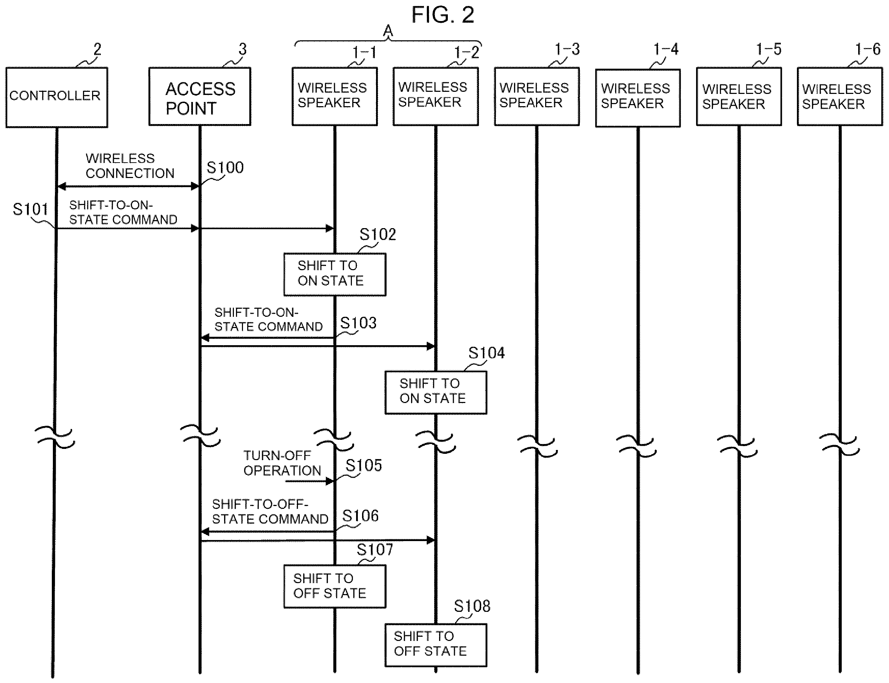

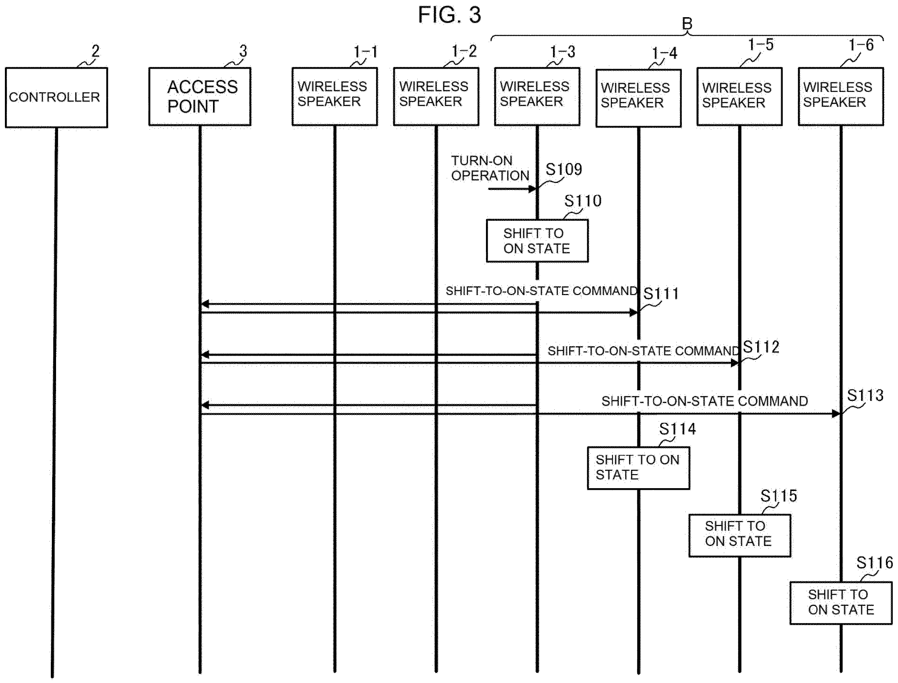

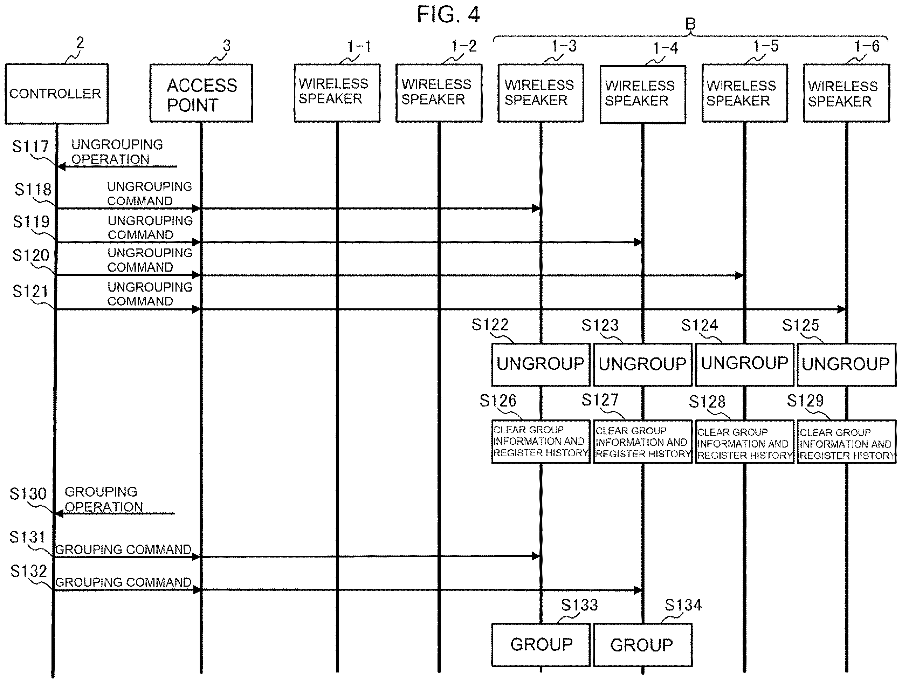

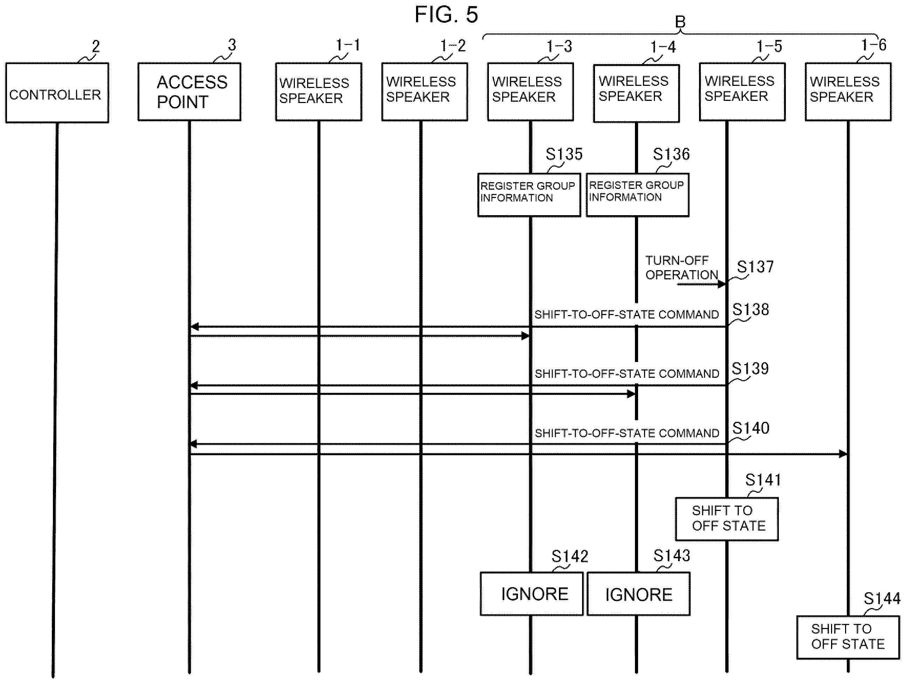

FIG. 2 to FIG. 5 are sequence diagrams for illustrating an operation example of the wireless audio system according to this embodiment.

In this case, it is assumed that the wireless speakers 1-1 and 1-2 installed in the room A form a group A and the wireless speakers 1-3 to 1-6 installed in the room B form a group B.

It is assumed that a user has returned home to his or her house in which the wireless audio system according to this embodiment is installed while carrying the controller 2. The controller 2 is wirelessly connected to the access point 3 in his or her house which is registered in advance (Step S100), and when recognizing the wireless speakers 1-1 to 1-6 that are wirelessly connected to the access point 3, transmits, through the access point 3, a shift-to-on-state command to the wireless speaker 1-1 registered in advance as the wireless speaker 1 to be shifted to an on (active) state at a time of returning home (Step S101).

When the wireless speaker 1-1 receives the shift-to-on-state command from the controller 2 through the access point 3, the wireless speaker 1-1 shifts the own wireless speaker 1-1 to an on state (Step S102) . Then, the wireless speaker 1-1 refers to member information on the group A, which is registered as affiliated group information, to transmit the shift-to-on-state command to the other wireless speaker 1-2 belonging to the group A through the access point 3 (Step S103). In response thereto, the wireless speaker 1-2 shifts the own wireless speaker 1-2 to an on state (Step S104) .

Thus, the user selects the master from among the wireless speakers 1-1 and 1-2 belonging to the group A, to thereby be able to perform group reproduction through use of all the wireless speakers 1-1 and 1-2 belonging to the group A, which are installed in the room A.

After that, it is assumed that the user has finished the group reproduction using the wireless speakers 1-1 and 1-2 belonging to the group A, and before moving from the room A to the room B, has turned off a power button of the wireless speaker 1-1 installed in the room A (Step S105) .

In response thereto, the wireless speaker 1-1 refers to the member information on the group A, which is registered as the affiliated group information, to transmit a shift-to-off-state command to the other wireless speaker 1-2 belonging to the group A through the access point 3 (Step S106), and then shifts the own wireless speaker 1-1 to an off (standby) state (Step S107) . Further, when the wireless speaker 1-2 receives the shift-to-off-state command from the wireless speaker 1-1, the wireless speaker 1-2 shifts the own wireless speaker 1-2 to the off state (Step S108).

Subsequently, it is assumed that the user has moved to the room B and has turned on a power button of the wireless speaker 1-3 installed in the room B (Step S109).

In response thereto, the wireless speaker 1-3 shifts the own wireless speaker 1-3 to an on state (Step S110). Then, the wireless speaker 1-3 refers to member information on the group B, which is registered as affiliated group information, to transmit the shift-to-on-state command to the other wireless speakers 1-4 to 1-6 belonging to the group B through the access point 3 (Step Sill to Step S113). In response thereto, the wireless speakers 1-4 to 1-6 shifts the own wireless speakers 1-4 to 1-6 to an on state (Step S114 to Step S116).

Thus, the user selects the master from among the wireless speakers 1-3 to 1-6 belonging to the group B, to thereby be able to perform group reproduction through use of all the wireless speakers 1-3 to 1-6 belonging to the group B, which are installed in the room B.

Subsequently, it is assumed that the user has performed an ungrouping operation involving designation of the group B with respect to the controller 2 (Step S117).

In response thereto, the controller 2 transmits an ungrouping command to each of the wireless speakers 1-3 to 1-6 belonging to the group B through the access point 3 (Step S118 to Step S121). When the wireless speakers 1-3 to 1-6 receive the ungrouping command from the controller 2 through the access point 3, the wireless speakers 1-3 to 1-6 stop belonging to the group B (Step S122 to Step S125). In addition, the wireless speakers 1-3 to 1-6 delete the member information on the group B, which is registered as the affiliated group information, and registers the deleted member information on the group B as the group history information (Step S126 to Step S129) .

Subsequently, it is assumed that the user has performed a grouping operation for a new group B' formed of the wireless speakers 1-3 and 1-4 with respect to the controller 2 (Step S130).

In response thereto, the controller 2 transmits a grouping command for the group B' involving designation of the wireless speakers 1-3 and 1-4 to each of the wireless speakers 1-3 and 1-4 through the access point 3 (Step S131 and Step S132) . When the wireless speakers 1-3 and 1-4 receive the grouping command for the group B' from the controller 2 through the access point 3, the wireless speakers 1-3 and 1-4 set the own wireless speakers 1-3 and 1-4 as members belonging to the group B' (Step S133 and Step S134), and register affiliated group information obtained by setting the wireless speakers 1-3 and 1-4 designated by the grouping command as member information on the group B' (Step S135 and Step S136).

Thus, the user selects the master from among the wireless speakers 1-3 and 1-4 belonging to the group B', to thereby be able to perform group reproduction through use of all the wireless speakers 1-3 and 1-4 belonging to the new group B', which are installed in the room B.

After that, it is assumed that the user has turned off a power button of the ungrouped wireless speaker 1-5 (Step S137).

In response thereto, the wireless speaker 1-5 confirms that no affiliated group information is registered therein, and refers to the group history information (member information on the group B to which the own wireless speaker 1-5 belonged immediately before) to transmit the shift-to-off-state command to the wireless speakers 1-3, 1-4, and 1-6, which belonged to the group B together with the own wireless speaker 1-5, through the access point 3 (Step S138 to Step S140). Then, the wireless speaker 1-5 shifts the own wireless speaker 1-5 to an off state (Step S141).

When the wireless speakers 1-3 and 1-4 receive the shift-to-off-state command from the wireless speaker 1-5, the wireless speakers 1-3 and 1-4 refer to the member information on the group B', which is registered as the affiliated group information, to confirm that the wireless speaker 1-5 is not a member of the group B' to which the own wireless speakers 1-3 and 1-4 belong, and ignore the received shift-to-off-state command (Step S142 and Step S143) .

Meanwhile, when the wireless speaker 1-6 receives the shift-to-off-state command from the wireless speaker 1-5, the wireless speaker 1-6 confirms that no affiliated group information is registered in the own wireless speaker 1-6 (that the own wireless speaker 1-6 does not belong to any group) and that the wireless speaker 1-5 is a wireless speaker identified by the group history information registered in the own wireless speaker 1-6 (that the wireless speaker 1-5 was a member of the group B to which the own wireless speaker 1-6 belonged immediately before), and shifts the own wireless speaker 1-6 to an off state (Step S144) .

Next, the wireless speaker 1 and the controller 2 that form the wireless audio system according to this embodiment are described.

First, the wireless speaker 1 is described.

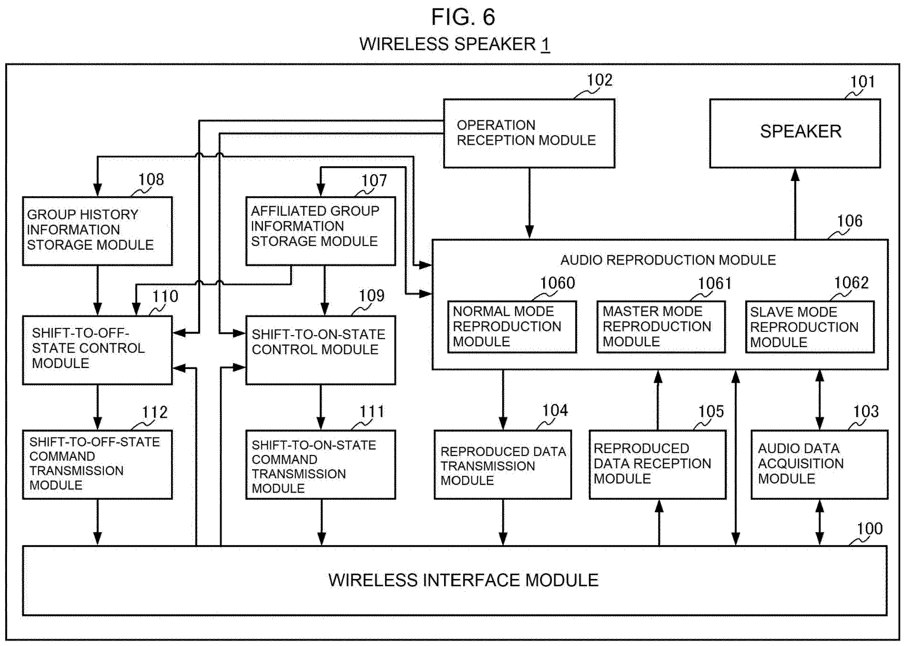

FIG. 6 is a schematic functional configuration diagram of the wireless speaker 1.

Functional components of the wireless speaker 1 illustrated in the figure are implemented by, for example, a computer including a central processing unit (CPU), a memory, an auxiliary storage device such as a flash memory or a hard disk drive, a wireless communication device such as a wireless LAN adapter, and input and output devices such as a speaker and a microphone when the CPU loads a predetermined program from the auxiliary storage device onto the memory and executes the predetermined program.

As illustrated in the figure, the wireless speaker 1 includes a wireless interface module 100, a speaker 101, an operation reception module 102, an audio data acquisition module 103, a reproduced data transmission module 104, a reproduced data reception module 105, an audio reproduction module 106, an affiliated group information storage module 107, a group history information storage module 108, a shift-to-on-state control module 109, a shift-to-off-state control module 110, a shift-to-on-state command transmission module 111, and a shift-to-off-state command transmission module 112.

The wireless interface module 100 is an interface for establishing connection to the access point 3.

The operation reception module 102 is provided with a power button, and receives various operations including an on or off operation of a power supply from the user.

The audio data acquisition module 103 acquires audio data from the media server 5 through the wireless interface module 100.

The reproduced data transmission module 104 transmits the reproduced data of the audio data, which has been reproduced by the audio reproduction module 106, to another wireless speaker 1 through the wireless interface module 100.

The reproduced data reception module 105 receives the reproduced data of the audio data from another wireless speaker 1 through the wireless interface module 100.

The audio reproduction module 106 sets a reproduction mode (any one of a normal mode, a master mode, or a slave mode) of the own wireless speaker 1. The audio reproduction module 106 includes a normal mode reproduction module 1060, a master mode reproduction module 1061, and a slave mode reproduction module 1062.

When the wireless speaker 1 is set to the normal mode, the wireless speaker 1 causes the normal mode reproduction module 1060 to independently reproduce the audio data. Specifically, the normal mode reproduction module 1060 causes the audio data acquisition module 103 to acquire desired audio data from the media server 5 in accordance with an instruction of the user received by the operation reception module 102 or received from the controller 2 through the wireless interface module 100. Then, the audio data acquired by the audio data acquisition module 103 is reproduced, and the reproduced data is output from the speaker 101 as audio.

When the wireless speaker 1 is set to the master mode for the group reproduction, the wireless speaker 1 serves as the master, and causes the master mode reproduction module 1061 to reproduce and output the same audio data in synchronization with the slave wireless speaker 1 belonging to the same group as that of the own wireless speaker 1. Specifically, the master mode reproduction module 1061 causes the audio data acquisition module 103 to acquire desired audio data from the media server 5 in accordance with an instruction of the user received by the operation reception module 102 or received from the controller 2 through the wireless interface module 100. Then, the audio data acquired by the audio data acquisition module 103 is reproduced, and the reproduced data is output from the speaker 101 as audio. At the same time, the reproduced data transmission module 104 is caused to transmit the reproduced data to each slave wireless speaker 1 belonging to the same group as that of the own wireless speaker 1.

When the wireless speaker 1 is set to the slave mode for the group reproduction, the wireless speaker 1 serves as the slave, and causes the slave mode reproduction module 1062 to reproduce and output the same audio data in synchronization with the master wireless speaker 1 belonging to the same group as that of the own wireless speaker 1. Specifically, the slave mode reproduction module 1062 causes the speaker 101 to output as audio the reproduced data of the audio data received by the reproduced data reception module 105 from the master wireless speaker 1 belonging to the same group as that of the own wireless speaker 1.

The affiliated group information storage module 107 stores, for each of members of the group to which the own wireless speaker currently belongs, member information including identification information on the wireless speaker 1 being the member and a master or slave type of the wireless speaker 1. The audio reproduction module 106 stores the member information on the group to which the own wireless speaker 1 currently belongs into the affiliated group information storage module 107 in accordance with an instruction of the user received from the controller 2 through the wireless interface module 100. When the own wireless speaker 1 is set to the normal mode, no member information is registered in the affiliated group information storage module 107 (null state).

The group history information storage module 108 stores the above-mentioned member information for each of members of the group to which the own wireless speaker 1 belonged immediately before. When the audio reproduction module 106 updates or deletes the member information stored in the affiliated group information storage module 107, the audio reproduction module 106 updates registered information of the group history information storage module 108 to the member information that has been stored in the affiliated group information storage module 107 so far.

When the own wireless speaker 1 is instructed to shift to the on state by the power button of the operation reception module 102 or by the controller 2 through the wireless interface module 100 or when the shift-to-on-state command is received from another wireless speaker 1 belonging to the same group as that of the own wireless speaker 1 through the wireless interface module 100, the shift-to-on-state control module 109 shifts the own wireless speaker 1 to the on state.

When the own wireless speaker 1 shifts to an on state, the speaker 101, the audio data acquisition module 103, the reproduced data transmission module 104, the reproduced data reception module 105, and the audio reproduction module 106 are enabled.

When the own wireless speaker 1 is instructed to shift to the off state by the power button of the operation reception module 102 or by the controller 2 through the wireless interface module 100 or when the shift-to-off-state command is received from another wireless speaker 1 belonging to the same group as that of the own wireless speaker 1 through the wireless interface module 100, the shift-to-off-state control module 110 shifts the own wireless speaker 1 to the off state.

In addition, when the shift-to-off-state command is received from another wireless speaker 1 having been a member of the group to which the own wireless speaker 1 belonged immediately before, the shift-to-off-state control module 110 shifts the own wireless speaker 1 to the off state in a case in which the own wireless speaker 1 currently belongs to no group.

When the own wireless speaker 1 shifts to the off state, the speaker 101, the audio data acquisition module 103, the reproduced data transmission module 104, the reproduced data reception module 105, and the audio reproduction module 106 are disabled.

When the own wireless speaker 1 is instructed to shift to the on state by the power button of the operation reception module 102 or by the controller 2 through the wireless interface module 100, the shift-to-on-state command transmission module 111 transmits the shift-to-on-state command to each of the other wireless speakers 1 belonging to the same group as that of the own wireless speaker 1 through the wireless interface module 100.

When the own wireless speaker 1 is instructed to shift to the off state by the power button of the operation reception module 102 or by the controller 2 through the wireless interface module 100, the shift-to-off-state command transmission module 112 transmits the shift-to-off-state command to each of the other wireless speakers 1 belonging to the same group as that of the own wireless speaker 1 through the wireless interface module 100.

In addition, when the own wireless speaker 1 is instructed to shift to the off state by the power button of the operation reception module 102 or by the controller 2 through the wireless interface module 100, the shift-to-off-state command transmission module 112 transmits the shift-to-off-state command to each of the other wireless speakers 1 having been the members of the group to which the own wireless speaker 1 belonged immediately before in the case in which the own wireless speaker 1 currently belongs to no group.

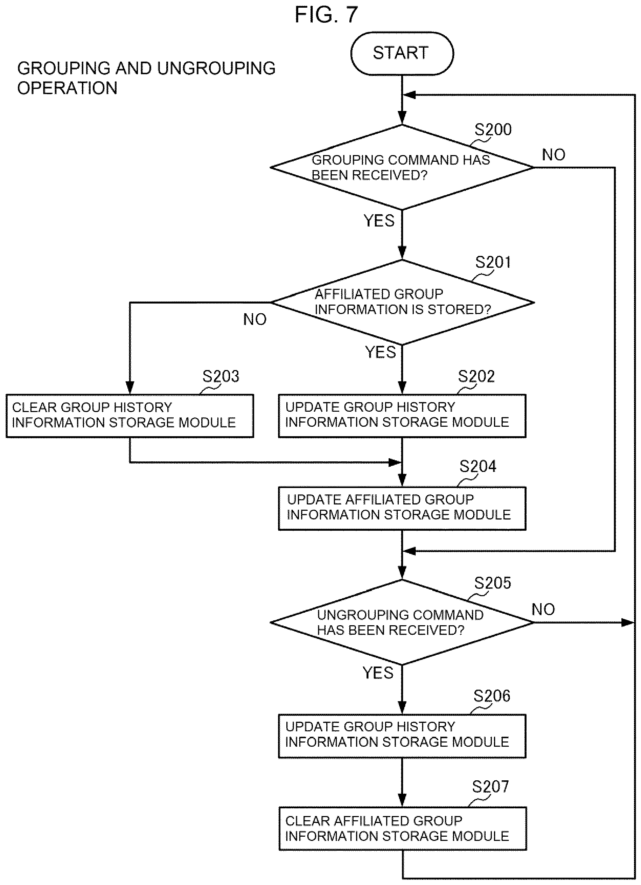

FIG. 7 is a flow chart for illustrating a grouping and ungrouping operation of the wireless speaker 1.

When the audio reproduction module 106 receives a grouping command involving the designation of the member information (identification information and master or slave type) on each of the belonging members from the controller 2 through the wireless interface module 100 ("YES" in Step S200), the audio reproduction module 106 refers to the affiliated group information storage module 107 to examine whether or not the affiliated group information storage module 107 stores member information (Step S201).

When the affiliated group information storage module 107 stores member information ("YES" in Step S201), the audio reproduction module 106 updates the registered information of the group history information storage module 108 to the member information stored in the affiliated group information storage module 107 (Step S202). Meanwhile, when the affiliated group information storage module 107 does not store member information ("NO" in Step S201), the audio reproduction module 106 clears the registered information of the group history information storage module 108 (Step S203).

Then, the audio reproduction module 106 updates registered information of the affiliated group information storage module 107 to the member information on each of the belonging members designated by the grouping command (Step S204).

Meanwhile, when the audio reproduction module 106 receives an ungrouping command from the controller 2 through the wireless interface module 100 ("YES" in Step S205), the audio reproduction module 106 updates the registered information of the group history information storage module 108 to the member information stored in the affiliated group information storage module 107 (Step S206). Then, the audio reproduction module 106 clears the registered information of the affiliated group information storage module 107 (Step S207).

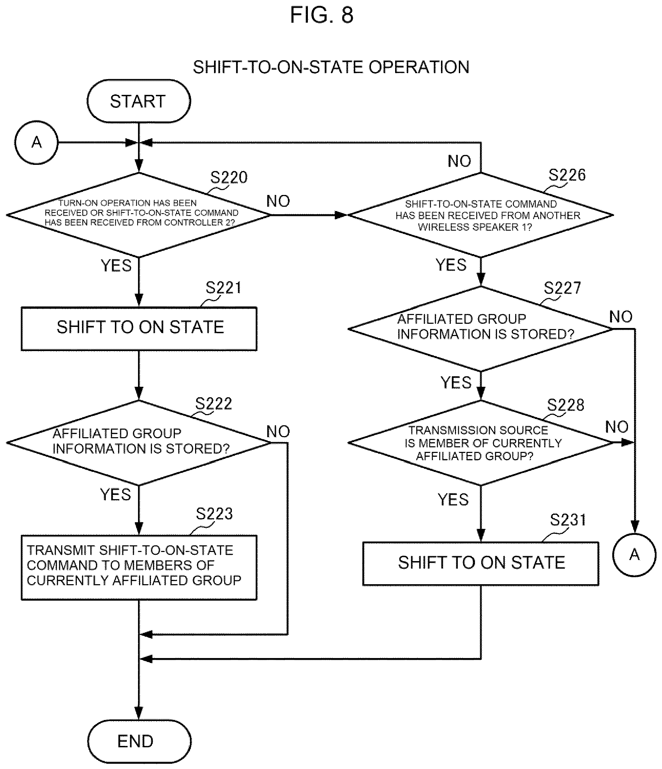

FIG. 8 is a flow chart for illustrating an operation for shifting the wireless speaker 1 to the on state.

This flow is performed when the wireless speaker 1 is in the off state.

When the shift-to-on-state control module 109 receives a turn-on operation of the power button from the user through the operation reception module 102 or when the shift-to-on-state control module 109 receives the shift-to-on-state command from the controller 2 through the wireless interface module 100 ("YES" in Step S220), the shift-to-on-state control module 109 shifts the own wireless speaker 1 to the on state (Step S221).

Subsequently, the shift-to-on-state control module 109 refers to the affiliated group information storage module 107 to examine whether or not the affiliated group information storage module 107 stores member information (Step S222).

When the affiliated group information storage module 107 stores member information ("YES" in Step S222), the shift-to-on-state control module 109 notifies the shift-to-on-state command transmission module 111 of the member information (member information on each of the members of the group to which the own wireless speaker 1 currently belongs) stored in the affiliated group information storage module 107, and instructs the shift-to-on-state command transmission module 111 to transmit the shift-to-on-state command. In response thereto, the shift-to-on-state command transmission module 111 transmits the shift-to-on-state command to each of the other wireless speakers 1 being the members of the group to which the own wireless speaker 1 currently belongs through the wireless interface module 100 (Step S223), and then ends this flow.

Meanwhile, when the affiliated group information storage module 107 does not store member information ("NO" in Step S222), the shift-to-on-state control module 109 immediately ends this flow.

Meanwhile, when the shift-to-on-state control module 109 receives the shift-to-on-state command from another wireless speaker 1 through the wireless interface module 100 ("YES" in Step S226), the shift-to-on-state control module 109 refers to the affiliated group information storage module 107 to examine whether or not the affiliated group information storage module 107 stores member information (Step S227).

When the affiliated group information storage module 107 stores member information ("YES" in Step S227) and the member information on a transmission source of the shift-to-on-state command is stored in the affiliated group information storage module 107 ("YES" in Step S228), the shift-to-on-state control module 109 shifts the own wireless speaker 1 to the on state (Step S231), and ends this flow. When the member information on the transmission source of the shift-to-on-state command is not stored in the affiliated group information storage module 107 ("NO" in Step S228), the shift-to-on-state control module 109 does not shift the own wireless speaker 1 to the on state, and the process returns to Step S220.

Meanwhile, when the affiliated group information storage module 107 does not store member information ("NO" in Step S227), the shift-to-on-state control module 109 does not shift the own wireless speaker 1 to the on state, and the process returns to Step S220.

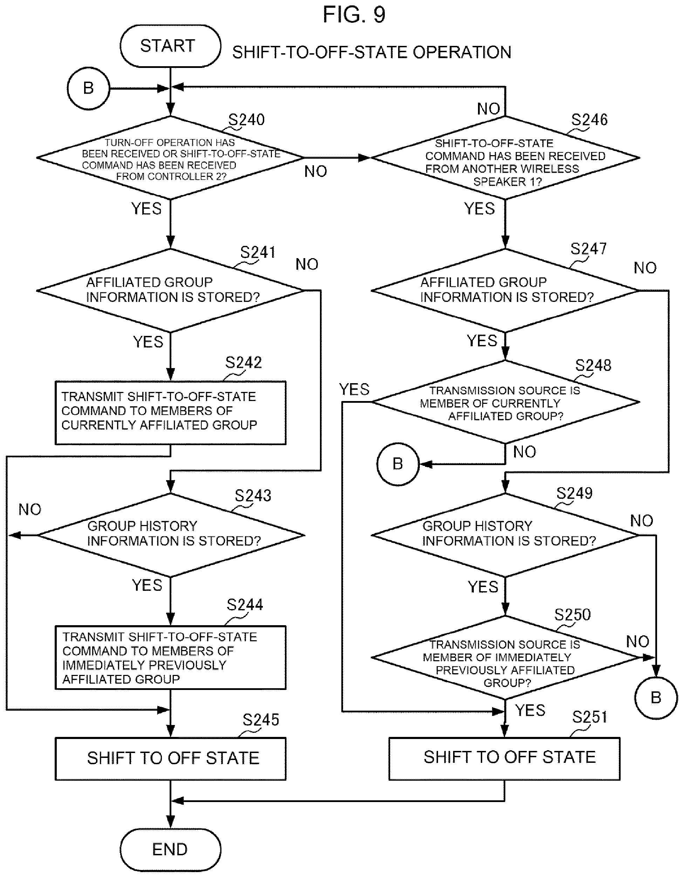

FIG. 9 is a flow chart for illustrating an operation for shifting the wireless speaker 1 to the off state.

This flow is performed when the wireless speaker 1 is in the on state.

When the shift-to-off-state control module 110 receives a turn-off operation of the power button from the user through the operation reception module 102 or when the shift-to-off-state control module 110 receives the shift-to-off-state command from the controller 2 through the wireless interface module 100 ("YES" in Step S240), the shift-to-off-state control module 110 refers to the affiliated group information storage module 107 to examine whether or not the affiliated group information storage module 107 stores member information (Step S241).

When the affiliated group information storage module 107 stores member information ("YES" in Step S241), the shift-to-off-state control module 110 notifies the shift-to-off-state command transmission module 112 of the member information (member information on each of the members of the group to which the own wireless speaker 1 currently belongs) stored in the affiliated group information storage module 107, and instructs the shift-to-off-state command transmission module 112 to transmit the shift-to-off-state command. In response thereto, the shift-to-off-state command transmission module 112 transmits the shift-to-off-state command to each of the other wireless speakers 1 being the members of the group to which the own wireless speaker 1 currently belongs through the wireless interface module 100 (Step S242). After that, the shift-to-off-state control module 110 shifts the own wireless speaker 1 to the off state (Step S245), and ends this flow.

Meanwhile, when the affiliated group information storage module 107 does not store member information ("NO" in Step S241), the shift-to-off-state control module 110 refers to the group history information storage module 108 to examine whether or not the group history information storage module 108 stores member information (Step S243).

When the group history information storage module 108 stores member information ("YES" in Step S243), the shift-to-off-state control module 110 notifies the shift-to-off-state command transmission module 112 of the member information (member information on each of the members of the group to which the own wireless speaker 1 belonged immediately before) stored in the group history information storage module 108, and instructs the shift-to-off-state command transmission module 112 to transmit the shift-to-off-state command. In response thereto, the shift-to-off-state command transmission module 112 transmits the shift-to-off-state command to each of the other wireless speakers 1 having been the members of the group to which the own wireless speaker 1 belonged immediately before through the wireless interface module 100 (Step S244). After that, the shift-to-off-state control module 110 shifts the own wireless speaker 1 to the off state (Step S245), and ends this flow.

Meanwhile, when the group history information storage module 108 does not store member information ("NO" in Step S243), the shift-to-off-state control module 110 immediately shifts the own wireless speaker 1 to the off state (Step S245), and ends this flow.

Meanwhile, when the shift-to-off-state control module 110 receives the shift-to-off-state command from another wireless speaker 1 through the wireless interface module 100 ("YES" in Step S246), the shift-to-off-state control module 110 refers to the affiliated group information storage module 107 to examine whether or not the affiliated group information storage module 107 stores member information (Step S247).

When the affiliated group information storage module 107 stores member information ("YES" in Step S247) and the member information on a transmission source of the shift-to-off-state command is stored in the affiliated group information storage module 107 ("YES" in Step S248), the shift-to-off-state control module 110 shifts the own wireless speaker 1 to the off state (Step S251), and ends this flow. When the member information on the transmission source of the shift-to-off-state command is not stored in the affiliated group information storage module 107 ("NO" in Step S248), the shift-to-off-state control module 110 does not shift the own wireless speaker 1 to the off state, and the process returns to Step S240.

Meanwhile, when the affiliated group information storage module 107 does not store member information ("NO" in Step S247), the shift-to-off-state control module 110 refers to the group history information storage module 108 to examine whether or not the group history information storage module 108 stores member information (Step S249).

When the group history information storage module 108 stores member information ("YES" in Step S249) and the member information on the transmission source of the shift-to-off-state command is stored in the group history information storage module 108 ("YES" in Step S250), the shift-to-off-state control module 110 shifts the own wireless speaker 1 to the off state (Step S251), and ends this flow.

Meanwhile, when the group history information storage module 108 does not store member information ("NO" in Step S249) or when the member information on the transmission source of the shift-to-off-state command is not stored in the group history information storage module 108 ("NO" in Step S250), the shift-to-off-state control module 110 does not shift the own wireless speaker 1 to the off state, and the process returns to Step S240.

Next, the controller 2 is described.

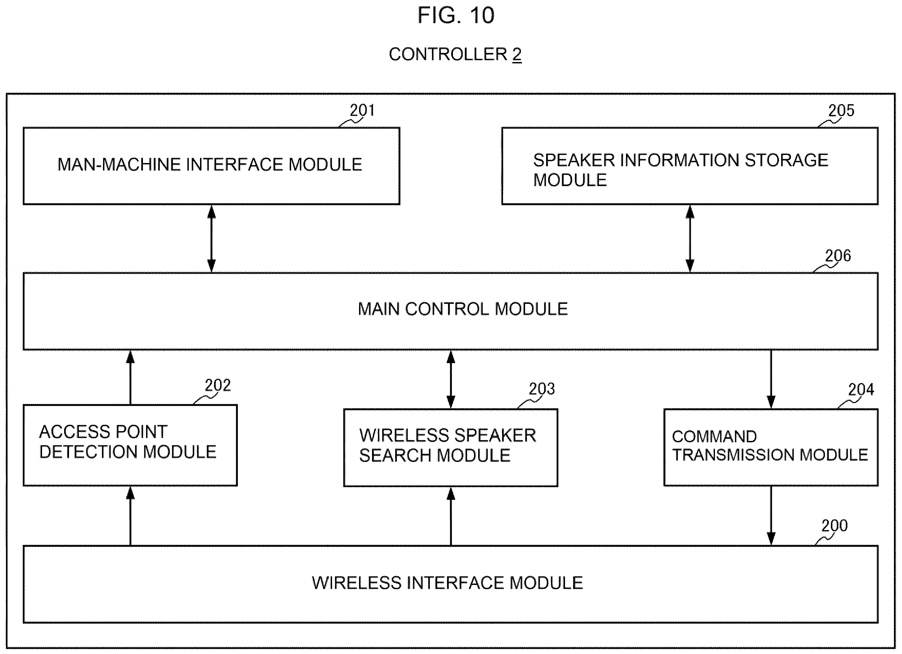

FIG. 10 is a schematic functional configuration diagram of the controller 2.

Functional components of the controller 2 illustrated in the figure are implemented by, for example, a portable computer such as a smartphone or a tablet PC including a CPU, a memory, an auxiliary storage device such as a flash memory, a wireless communication device such as a wireless LAN adapter, and input and output devices such as a touch panel, a display, and a pointing device when the CPU loads a predetermined program from the auxiliary storage device onto the memory and executes the predetermined program.

As illustrated in the figure, the controller 2 includes a wireless interface module 200, a man-machine interface module 201, an access point detection module 202, a wireless speaker search module 203, a command transmission module 204, a speaker information storage module 205, and a main control module 206.

The wireless interface module 200 is an interface for establishing wireless connection to a base station such as the access point 3.

The man-machine interface module 201 is an interface for displaying information to the user and receiving various operations from the user.

The access point detection module 202 detects the wireless connection between the access point 3 being a base station registered in advance and the wireless interface module 200.

The wireless speaker search module 203 searches for wireless speakers 1 wirelessly connected to the access point 3 registered in advance, and acquires on or off states thereof.

The command transmission module 204 transmits various commands including the shift-to-on-state command and the shift-to-off-state command to the wireless speaker 1, which has been retrieved by the wireless speaker search module 203, through the wireless interface module 200.

The speaker information storage module 205 stores, for each of the wireless speakers 1 wirelessly connected to the access point 3 registered in advance, speaker information including the identification information on the wireless speaker 1 and the on or off state of the wireless speaker 1 together with, when the wireless speaker 1 belongs to a group, identification information on the group and the master or slave type.

The main control module 206 centrally controls the respective modules 200 to 205 of the controller 2. In addition, when the wireless interface module 200 is wirelessly connected to the access point 3 registered in advance, the main control module 206 periodically causes the wireless speaker search module 203 to search for wireless speakers 1, and updates, based on search results thereof, the on or off state of each of the wireless speakers 1 stored in the speaker information storage module 205. In this case, when the speaker information on a wireless speaker 1 that has not been retrieved by the wireless speaker search module 203 is stored in the speaker information storage module 205, the speaker information on the wireless speaker 1 is deleted. Meanwhile, when a wireless speaker 1 for which the speaker information is not stored in the speaker information storage module 205 is retrieved by the wireless speaker search module 203, the speaker information on the wireless speaker 1 is added to the speaker information storage module 205.

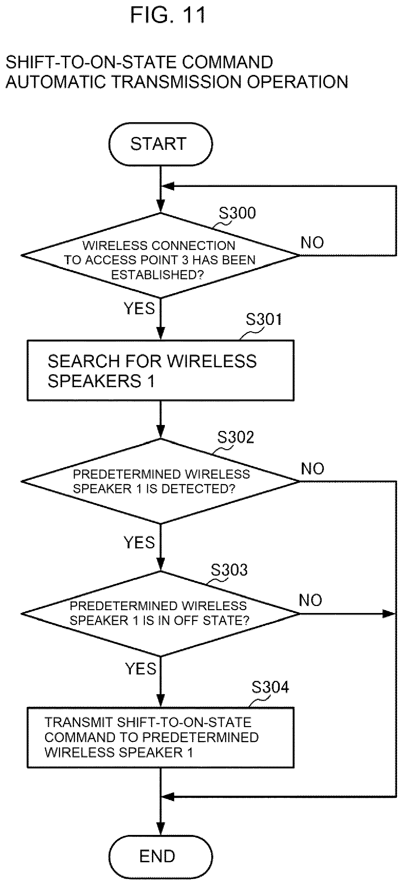

FIG. 11 is a flow chart for illustrating a shift-to-on-state command automatic transmission operation of the controller 2.

This flow is performed when the controller 2 is not wirelessly connected to the access point 3 registered in advance.

The access point detection module 202 monitors whether or not the wireless interface module 200 has been wirelessly connected to the access point 3 registered in advance as a base station installed in his or her house or the like (Step S300). When the wireless interface module 200 detects that the wireless interface module 200 has been wirelessly connected to the access point 3 ("YES" in Step S300), the wireless interface module 200 notifies the main control module 206 to that effect.

In response thereto, the main control module 206 instructs the wireless speaker search module 203 to search for wireless speakers 1. The wireless speaker search module 203 retrieves wireless speakers 1 wirelessly connected to the access point 3, acquires on or off states thereof (Step S301), and notifies the main control module 206 of search results thereof.

Subsequently, the main control module 206 updates the speaker information storage module 205 based on the search results received from the wireless speaker search module 203, and examines whether or not the search results include a predetermined wireless speaker 1 registered in advance as an automatic transmission destination of the shift-to-on-state command (Step S302). When the search results received from the wireless speaker search module 203 include the predetermined wireless speaker 1 ("YES" in Step S302) and the predetermined wireless speaker 1 is in the off state ("YES" in Step S303), the main control module 206 instructs the command transmission module 204 to transmit the shift-to-on-state command to the predetermined wireless speaker 1.

In response thereto, the command transmission module 204 transmits the shift-to-on-state command to the predetermined wireless speaker 1 through the wireless interface module 200 (Step S304).

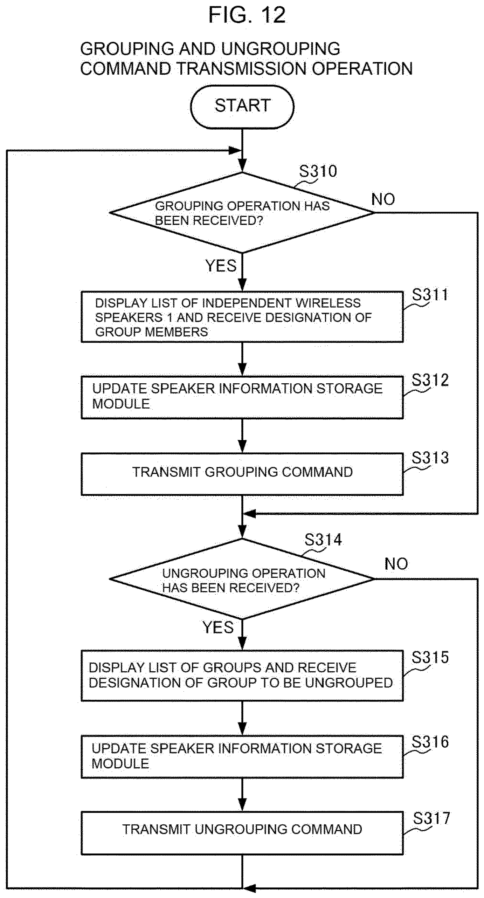

FIG. 12 is a flow chart for illustrating a grouping and ungrouping command transmission operation of the controller 2.

This flow is performed when the controller 2 is wirelessly connected to the access point 3 registered in advance. In this case, as described above, the main control module 206 periodically causes the wireless speaker search module 203 to retrieve wireless speakers 1, acquires the on or off state of each of the wireless speakers 1, and updates the speaker information storage module 205.

When the main control module 206 receives a grouping operation from the user through the man-machine interface module 201 ("YES" in Step S310), the main control module 206 searches for the speaker information on a wireless speaker 1 that does not belong to any group (that has the speaker information in which the identification information on a group and the master or slave type are not registered) from the speaker information storage module 205, and displays search results thereof on the man-machine interface module 201 as a list. Then, the main control module 206 receives, from the user, the designation of the wireless speakers 1 to be set as members of a group, and receives the designation of a wireless speaker 1 to be set as the master from among the designated wireless speakers 1 (Step S311).

Subsequently, the main control module 206 refers to the speaker information storage module 205 to register the identification information on the group set freely or set by the user into the speaker information on each of the wireless speakers 1 designated as the members of the group, register a master or slave type of "master" into the speaker information on the wireless speaker 1 designated as the master among the wireless speakers 1, and register a master or slave type of "slave" into the speaker information on the other wireless speakers 1 (Step S312). Then, the main control module 206 notifies the command transmission module 204 of the identification information on each of the wireless speakers 1 designated as the member of the group and the master or slave type of each of the wireless speakers 1, and instructs the command transmission module 204 to transmit the grouping command.

In response thereto, the command transmission module 204 transmits the grouping command involving the designation of the identification information on each of the members of the group and the master or slave type of each of the members to each of the wireless speakers 1 designated as the members of the group through the wireless interface module 200 (Step S313) .

Further, when the main control module 206 receives the ungrouping operation from the user through the man-machine interface module 201 ("YES" in Step S314), the main control module 206 refers to the speaker information storage module 205 to display the speaker information on each of the members of the group on the man-machine interface module 201 as a list for each group, and receives the designation of a group to be ungrouped from the user (Step S315) .

Subsequently, the main control module 206 deletes the identification information on a group and the master or slave type from the speaker information on each of the members of the group to be ungrouped among pieces of speaker information stored in the speaker information storage module 205 (Step S316) . Then, the main control module 206 notifies the command transmission module 204 of the identification information on each of the wireless speakers 1 being the members of the group to be ungrouped, and instructs the command transmission module 204 to transmit the ungrouping command.

In response thereto, the command transmission module 204 transmits the ungrouping command to each of the wireless speakers 1 being the members of the group to be ungrouped through the wireless interface module 200 (Step S317).

The one embodiment of the present invention has been described above.

With this embodiment, it is possible to collectively shift all the wireless speakers 1 belonging to the same group to the on state by operating the power button of any one wireless speaker 1 of the wireless speakers 1 belonging to the group to instruct the shift to the on state or by operating the controller 2 to select any one wireless speaker 1 and instruct the shift to the on state. Further, it is possible to collectively shift all the wireless speakers 1 belonging to the same group to the off state by operating the power button of any one wireless speaker 1 of the wireless speakers 1 belonging to the group to instruct the shift to the off state or by operating the controller 2 to select any one wireless speaker 1 and instruct the shift to the off state. Therefore, according to this embodiment, it is possible to increase convenience of an operator in controlling the on or off state of the plurality of wireless speakers 1.

Further, in this embodiment, when the wireless speaker 1 receives the shift-to-off-state command from another wireless speaker 1, the wireless speaker 1 shifts the own wireless speaker 1 to the off state in a case in which the wireless speaker 1 being the transmission source of the shift-to-off-state command was a member of the group to which the own wireless speaker 1 belonged immediately before and the own wireless speaker 1 currently belongs to no group. Further, when the own wireless speaker 1 is instructed to shift to the off state by the power button or by the controller 2 and the own wireless speaker 1 currently belongs to no group, the wireless speaker 1 transmits the shift-to-off-state command to each of the other wireless speakers 1 having been the members of the group to which the own wireless speaker 1 belonged immediately before, and shifts the own wireless speaker 1 to the off state. Therefore, according to the present invention, it is possible to collectively shift the wireless speakers 1 that are not used for the group reproduction to the off state by instructing any one wireless speaker 1 of those wireless speakers 1 to shift to the off state, and hence it is possible to further increase the convenience of the operator.

Further, in this embodiment, when the controller 2 is wirelessly connected to the access point 3 registered in advance, the controller 2 transmits the shift-to-on-state command to the predetermined wireless speaker 1 registered in advance as the automatic transmission destination of the shift-to-on-state command. Therefore, according to this embodiment, with the registration of the access point 3 installed in his or her house in the controller 2, all the wireless speakers 1 belonging to the same group as that of the predetermined wireless speaker 1 automatically shift to the on state when the user who carries the controller 2 returns home, and hence the user can more quickly perform the group reproduction of the audio data after returning home.

The present invention is not limited to the above-mentioned embodiment, and various modifications can be made thereto within the scope of the gist of the invention.

For example, in the above-mentioned embodiment, when the controller 2 is wirelessly connected to the access point 3 registered in advance, the controller 2 transmits the shift-to-on-state command to the predetermined wireless speaker 1 registered in advance as the automatic transmission destination of the shift-to-on-state command. However, the present invention is not limited thereto. The controller 2 may be provided with a group reproduction history information storage module that stores member information on a group used for the most recent group reproduction, and when the controller 2 is wirelessly connected to the access point 3 registered in advance, the controller 2 may transmit the shift-to-on-state command to any one of wireless speakers 1 identified by the member information stored in the group reproduction history information storage module. With this configuration, the user can quickly perform, after returning home, the group reproduction of the audio data through use of the plurality of wireless speakers 1 used for the most recent group reproduction.

Further, in the above-mentioned embodiment, the wireless speaker 1 may be provided with a controller monitoring module. For example, when the shift-to-on-state command has been transmitted to each of the other wireless speakers 1 being the members of the group to which the own wireless speaker 1 currently belongs, the controller monitoring module monitors a connection state of the controller 2 wirelessly connected to the same access point 3 as that connected to the own wireless speaker 1, and when disconnection of the wireless connection to the controller 2 is detected, shifts the own wireless speaker 1 to the off state. In this case as well, the shift-to-off-state command is transmitted to each of the other wireless speakers 1 belonging to the same group as that of the own wireless speaker 1, which are identified by the member information stored in the affiliated group information storage module 107. With this configuration, when the controller 2 leaves the control of the access point 3, it is possible to automatically shift all the wireless speakers 1 in the group to the off state. In a case in which a plurality of controllers 2 are wirelessly connected to the access point 3, it is preferred that, when the controller monitoring module detects that the wireless connection to all the controllers 2 has been disconnected, the controller monitoring module shift the own wireless speaker 1 to the off state and transmit the shift-to-off-state command to each of the other wireless speakers 1 belonging to the same group as that of the own wireless speaker 1.

Further, in this case, the wireless speaker 1 may be provided with a shift-to-off-state notification module. For example, when the controller monitoring module detects the disconnection of the wireless connection to the controller 2, the shift-to-off-state notification module uses electronic mail, a short message service, or the like to notify the controller 2 through the Internet that each of the wireless speakers 1 identified by the member information stored in the affiliated group information storage module 107 has shifted to the off state. With this configuration, the user can confirm that the wireless speakers 1 have shifted to the off state under an environment, such as a visiting place, in which the controller 2 is not wirelessly connected to the access point 3 registered in advance.

Further, in the above-mentioned embodiment, a management server that manages a group to which each of the wireless speakers 1 belongs may be connected to the network 4, and when the own wireless speaker 1 is instructed to shift to the on or off state by the power button or by the controller 2, the wireless speaker 1 may update the member information stored in the group history information storage module 108 to the member information stored in the affiliated group information storage module 107 and acquire the member information on the group to which the own wireless speaker 1 currently belongs from the management server to update the member information stored in the affiliated group information storage module 107. In this case, the management server periodically acquires the affiliated group information from each of the wireless speakers 1, to thereby manage the group to which each of the wireless speakers 1 belongs. Further, at a time of grouping, the controller 2 notifies each of wireless speakers 1 belonging to a group of the identification information on the group and the master or slave type of the wireless speaker 1.

Further, the above-mentioned embodiment has been described by taking an exemplary case in which the wireless audio system is introduced into the house including the two rooms A and B, but the present invention is not limited thereto. The present invention can be widely applied to cases in which at least one wireless speaker 1 is placed in at least one space at a facility formed of a plurality of partitioned spaces.

### Reference Signs List

1, 1-1 to 1-6: wireless speaker, 2: controller
3: access point, 4: network, 5: media server
100: wireless interface module, 101: speaker
102: operation reception module, 103: audio data acquisition module
104: reproduced data transmission module, 105: reproduced data reception module
106: audio reproduction module, 107: affiliated group information storage module
108: group history information storage module, 109: shift-to-on-state control module
110: shift-to-off-state control module, 111: shift-to-on-state command transmission module
112: shift-to-off-state command transmission module, 1060: normal mode reproduction module
1061: master mode reproduction module, 1062: slave mode reproduction module
200: wireless interface module
201: man-machine interface module
202: access point detection module
203: wireless speaker search module, 204: command transmission module
205: speaker information storage module, 206: main control module

## Claims

1. A wireless speaker having a group reproduction function for synchronously reproducing the same audio data by a plurality of wireless speakers, the wireless speaker comprising:
affiliated group information storage means for storing member information on a group to which an own wireless speaker currently belongs;
shift-to-on-state control means for shifting the own wireless speaker to an on state when the own wireless speaker is instructed to shift to the on state by a power button provided to the own wireless speaker or by a controller for remotely operating the own wireless speaker or when a command to shift to the on state is received from another one of the plurality of wireless speakers;
shift-to-off-state control means for shifting the own wireless speaker to an off state when the own wireless speaker is instructed to shift to the off state by the power button or by the controller or when a command to shift to the off state is received from another one of the plurality of wireless speakers;
shift-to-on-state command transmission means for transmitting, when the own wireless speaker is instructed to shift to the on state by the power button or by the controller, the command to shift to the on state to each of the other ones of the plurality of wireless speakers being members of the group to which the own wireless speaker currently belongs, which are identified by the member information stored in the affiliated group information storage means; and
shift-to-off-state command transmission means for transmitting, when the own wireless speaker is instructed to shift to the off state by the power button or by the controller, the command to shift to the off state to each of the other ones of the plurality of wireless speakers being the members of the group to which the own wireless speaker currently belongs, which are identified by the member information stored in the affiliated group information storage means.

2. The wireless speaker according to claim 1, further comprising:
connection means for establishing connection to a server for managing a group to which each of the plurality of wireless speakers belongs; and
update means for updating, when the own wireless speaker is instructed to shift to the on state or the off state by the power button or by the controller, the member information stored in the affiliated group information storage means by acquiring the member information on the group to which the own wireless speaker currently belongs from the server through the connection means.

3. The wireless speaker according to claim 1, further comprising group history information storage means for storing member information on a group to which the own wireless speaker belonged immediately before,
wherein the shift-to-off-state control means is configured to shift the own wireless speaker to the off state when the command to shift to the off state is received from another one of the plurality of wireless speakers only in a case in which the another one of the plurality of wireless speakers is a member of the group to which the own wireless speaker currently belongs, which is identified by the member information stored in the affiliated group information storage means, or in a case in which the another one of the plurality of wireless speakers was a member of the group to which the own wireless speaker belonged immediately before, which is identified by the member information stored in the group history information storage means, and the affiliated group information storage means stores no member information, and
wherein the shift-to-off-state command transmission means is configured to transmit, when the own wireless speaker is instructed to shift to the off state by the power button or by the controller, the command to shift to the off state to each of the other ones of the plurality of wireless speakers having been members of the group to which the own wireless speaker belonged immediately before, which are identified by the member information stored in the group history information storage means, in a case in which the affiliated group information storage means stores no member information.

4. The wireless speaker according to claim 3, further comprising:
connection means for establishing connection to a server for managing a group to which each of the plurality of wireless speakers belongs; and
update means for updating, when the own wireless speaker is instructed to shift to the on state or the off state by the power button or by the controller, the member information stored in the group history information storage means to the member information stored in the affiliated group information storage means, and updating the member information stored in the affiliated group information storage means by acquiring the member information on the group to which the own wireless speaker currently belongs from the server through the connection means.

5. The wireless speaker according to any one of claims 1 to 4, further comprising controller monitoring means for monitoring a connection state of the controller wirelessly connected to the same access point as an access point connected to the own wireless speaker when the shift-to-on-state command transmission means has transmitted the command to shift to the on state to each of the other ones of the plurality of wireless speakers being members of the group to which the own wireless speaker currently belongs,
wherein the shift-to-off-state control means is configured to shift the own wireless speaker to the off state also when the controller monitoring means detects that the wireless connection to the controller has been disconnected, and
wherein the shift-to-off-state command transmission means is configured to transmit, also when the controller monitoring means detects that the wireless connection to the controller has been disconnected, the command to shift to the off state to each of the other ones of the plurality of wireless speakers being the members of the group to which the own wireless speaker currently belongs, which are identified by the member information stored in the affiliated group information storage means.

6. The wireless speaker according to claim 5, further comprising shift-to-off-state notification means for notifying, when the controller monitoring means detects that the wireless connection to the controller has been disconnected, the controller through Internet that each of the members of the group to which the own wireless speaker currently belongs, which are identified by the member information stored in the affiliated group information storage means, has shifted to the off state.

7. A wireless audio system, comprising:
the plurality of wireless speakers of any one of claims 1 to 6; and
a controller configured to remotely operate the plurality of wireless speaker,
wherein the plurality of wireless speakers are wirelessly connected to the same access point, and
wherein the controller is configured to instruct, when the controller is wirelessly connected to the access point, a predetermined wireless speaker of the plurality of wireless speakers to shift to an on state.

8. A wireless audio system, comprising:
the plurality of wireless speakers of any one of claims 1 to 6; and
a controller configured to remotely operate the plurality of wireless speaker,
wherein the plurality of wireless speakers are wirelessly connected to the same access point,
wherein the controller includes group reproduction history information storage means for storing member information on a group instructed to perform group reproduction most recently, and
wherein the controller is configured to instruct, when the controller is wirelessly connected to the access point, any one of the plurality of wireless speakers identified by the member information stored in the group reproduction history information storage means to shift to an on state.

9. A program for causing a computer to function as a wireless speaker having a group reproduction function for synchronously reproducing the same audio data by a plurality of wireless speakers,
the program causing the computer to function as:
affiliated group information storage means for storing member information on a group to which an own wireless speaker currently belongs;
shift-to-on-state control means for shifting the own wireless speaker to an on state when the own wireless speaker is instructed to shift to the on state by a power button provided to the own wireless speaker or by a controller for remotely operating the own wireless speaker or when a command to shift to the on state is received from another one of the plurality of wireless speakers;
shift-to-off-state control means for shifting the own wireless speaker to an off state when the own wireless speaker is instructed to shift to the off state by the power button or by the controller or when a command to shift to the off state is received from another one of the plurality of wireless speakers;
shift-to-on-state command transmission means for transmitting, when the own wireless speaker is instructed to shift to the on state by the power button or by the controller, the command to shift to the on state to each of the other ones of the plurality of wireless speakers being members of the group to which the own wireless speaker currently belongs, which are identified by the member information stored in the affiliated group information storage means; and
shift-to-off-state command transmission means for transmitting, when the own wireless speaker is instructed to shift to the off state by the power button or by the controller, the command to shift to the off state to each of the other ones of the plurality of wireless speakers being the members of the group to which the own wireless speaker currently belongs, which are identified by the member information stored in the affiliated group information storage means.

10. A method of state control for a wireless speaker having a group reproduction function for synchronously reproducing the same audio data by a plurality of wireless speakers, the method comprising:
storing, by the wireless speaker, member information on a group to which an own wireless speaker currently belongs;
shifting, by the wireless speaker, the own wireless speaker to an on state when the own wireless speaker is instructed to shift to the on state by a power button provided to the own wireless speaker or by a controller for remotely operating the own wireless speaker or when a command to shift to the on state is received from another one of the plurality of wireless speakers, and transmitting, when the own wireless speaker is instructed to shift to the on state by the power button or by the controller, the command to shift to the on state to each of the other ones of the plurality of wireless speakers being members of the group to which the own wireless speaker currently belongs, which are identified by the member information; and
shifting, by the wireless speaker, the own wireless speaker to an off state when the own wireless speaker is instructed to shift to the off state by the power button or by the controller or when a command to shift to the off state is received from another one of the plurality of wireless speakers, and transmitting, when the own wireless speaker is instructed to shift to the off state by the power button or by the controller, the command to shift to the off state to each of the other ones of the plurality of wireless speakers being the members of the group to which the own wireless speaker currently belongs, which are identified by the member information prior to the shifting of the own wireless speaker to the off state.
